# EUROPÄISCHE PATENTSCHRIFT

(11) **EP 4 381 488 B1**
(45) Veröffentlichungstag und Bekanntmachung des Hinweises auf die Patenterteilung: **29.07.2026**
(21) Anmeldenummer: 23721881.3
(22) Anmeldetag: 24.04.2023
(51) Int. Cl.: G06F 21/62

(54) **VERFAHREN ZUR ANONYMISIERUNG VON FAHRZEUGDATEN**
METHOD FOR ANONYMIZING VEHICLE DATA
PROCÉDÉ D'ANONYMISATION DE DONNÉES DE VÉHICULE

(30) Priorität: 17.05.2022 DE 102022001720
(43) Veröffentlichungstag der Anmeldung: 12.06.2024
(73) Patentinhaber: Mercedes-Benz Group AG, 70372 Stuttgart (DE)
(72) Erfinder: HANUSCHKIN, Alexander, 71263 Weil der Stadt (DE); HOIS, Joana, 71034 Böblingen (DE); STUDER, Stefan, 70565 Stuttgart (DE)
(74) Vertreter: Novagraaf Group
(86) Internationale Anmeldenummer: PCT/EP2023/060611
(87) Internationale Veröffentlichungsnummer: WO 2023/222331

(56) Entgegenhaltungen:
- DE-A1- 102020 003 188
- US-A1- 2018 173 895
- US-A1- 2021 070 286

## Beschreibung

Die Erfindung betrifft ein Verfahren zur Anonymisierung von Fahrzeugdaten für die Nutzung fahrzeugexterner Serviceleistungen. Außerdem betrifft die Erfindung ein Fahrzeug, welches zur Nutzung des Verfahrens eingerichtet ist.

In heutigen Fahrzeugen werden viele Daten von Fahrzeugen einer Fahrzeugflotte zyklisch mit fahrzeugexternen Servern beispielsweise eines Fahrzeugherstellers, eines Flottenbetreibers oder auch mit den Servern von Anbietern fahrzeugexterner Serviceleistungen ausgetauscht. Mit dem technischen Fortschritt und standardmäßigen Verbauen von Fahrzeugsensorik und Fahrzeuginnenraumsensorik sowie dem Austausch von Informationen, welche von dieser Sensorik erfasst werden wird an fahrzeugexternen Stellen eine starke Überwachungsmöglichkeit von Personen, ihren Daten und ihren Zuständen geschaffen. Diese Daten können dabei persönliche Daten eines Nutzers des Fahrzeugs enthalten oder entsprechende Fahrzeugdaten, welche Rückschlüsse auf die Person des Nutzers des Fahrzeugs zulassen. Insbesondere können solche Daten genutzt werden, um Nutzerprofile anzulegen, eine Art "Fingerabdruck" des jeweiligen Fahrzeugs zu erstellen oder dergleichen. Sie sind deshalb aus der Sicht des Datenschutzes mehr oder weniger stark schutzbedürftig. Dabei sorgen sich die das Fahrzeug nutzenden Personen einerseits um ihre Datenverwendung, gleichzeitig wollen sie aber vorhandene Services auch weiterhin nutzen können.

Die DE 10 2020 003 188 A1 beschreibt ein Verfahren zum Schutz von persönlichen Daten eines Fahrzeuginsassen, bei welchem als persönliche Daten emotionale Zustände des Fahrzeuginsassen im Fahrzeug erfasst werden und die maskierten emotionalen Zustände in einer fahrzeugexternen Einrichtung ausgewertet werden. Sie werden im Anschluss einer Mehrzahl von Emotionsmustern enthaltenden Emotionsgruppe zugeordnet, um so den emotionalen Zustand des Fahrzeuginsassen zu de-personalisieren, um ihn zu schützen.

Die zum Anmeldezeitpunkt nicht vorveröffentlichte DE 10 2021 001 378 B3 beschreibt ein Verfahren zur Anonymisierung von Bewegungsdaten von mit einer Positionserfassungseinrichtung ausgestatten Verkehrsteilnehmern. Das primäre Ziel ist hier eine Überwachung des Verkehrsflusses, bei welcher jedoch verhindert werden soll, dass die schutzbedürftigen Daten in die Übertragung einfließen, dass aber dennoch eine ausreichende Genauigkeit der Daten vorliegt, um eine zuverlässige Auswertung des Verkehrsflusses zu gewährleisten.

In der DE 10 2015 213 393 A1 werden Verfahren zur Anonymisierung von Fahrzeugdaten für die Nutzung fahrzeugexterner Serviceleistungen beschrieben. Hierbei werden zusätzlich zu Original-Fahrzeugdaten, welche von einem Fahrzeug befahrene Streckenabschnitte angeben, weitere künstliche Fahrzeugdaten generiert, welche eine künstliche Fahrstrecke angeben. Original-Fahrzeugdaten und künstliche Fahrzeugdaten werden gemeinsam gespeichert oder übermittelt.

Die DE 10 2015 226 650 A1 offenbart ein Verfahren zum anonymisierten Übermitteln eines ersten Werts eines Fahrparameters eines Fahrzeugs an eine externe Datenempfangseinheit. Es werden weitere Werte für den Fahrparameter von dem Fahrzeug empfangen, welche von weiteren Fahrzeugen an das Fahrzeug übermittelt werden, Aus dem ersten Wert und den weiteren Werten wird ein zweiter Wert für den Fahrparameter so berechnet, dass der erste Wert von der externen Datenempfangseinheit nicht rekonstruierbar ist. Der zweite Wert wird an die externe Datenempfangseinheit übermittelt.

Die US 2018/173895 A1 bzw. ihr deutsches Pedant DE 10 2016 225 287 A1 beschreiben ein Verfahren zur Anonymisierung von Fahrzeugdaten. Solche Daten können dann ohne Einwilligung der das Fahrzeug fahrenden Person genutzt werden, da sie alle Anforderungen an den Datenschutz erfüllen. Dazu werden drei verschiedene Verfahren eingesetzt. Diese umfassen eine örtliche Verschleierung der Daten, eine zeitliche Verschleierung der Daten sowie eine inhaltliche Fokussierung. Bei dieser inhaltlichen Fokussierung werden die Daten nicht verschleiert, sondern so voneinander getrennt, dass keine Personenbezug mehr herstellbar ist.

Die US 2021 070286 A1 beschäftigt sich ganz allgemein mit einer Umfeldsensorik in Fahrzeugen, welche dazu eingesetzt werden kann, das Fahrverhalten eines Zielfahrzeugs zu analysieren. Damit lassen sich dann Vorhersagen über das weitere Fahrverhalten dieses Zielfahrzeugs ableiten.

Die Aufgabe der hier vorliegenden Erfindung besteht nun insbesondere darin, ein verbessertes Verfahren zur Anonymisierung von Fahrzeugdaten bei der Nutzung fahrzeugexterner Dienstleistungen zu schaffen.

Erfindungsgemäß wird diese Aufgabe durch ein Verfahren mit den Merkmalen im Anspruch 1, und hier insbesondere im kennzeichnenden Teil des Anspruchs 1, gelöst. Vorteilhafte Ausgestaltungen und Weiterbildungen des erfindungsgemäßen Verfahrens ergeben sich aus den hiervon abhängigen Unteransprüchen. Im Anspruch 13 ist außerdem ein Fahrzeug beschrieben, welches zur Durchführung des Verfahrens geeignet ist.

Das erfindungsgemäße Verfahren dient zur Anonymisierung von Fahrzeugdaten für die Nutzung fahrzeugexterner Serviceleistungen. Dabei wird davon ausgegeben, dass in einer großen Flotte von gleichen Fahrzeugen sowie einer damit einhergehenden großen inhomogenen Gruppe von Fahrzeugnutzern, mit einer großen Wahrscheinlichkeit ähnlicher Fahrzeugnutzungsprofile existieren. Des Weiteren werden fahrzeugexternen Serviceleistungen genutzt, bei deren Nutzung Informationen aus den Fahrzeugen an den Anbieter der fahrzeugexternen Serviceleistungen gesendet werden.

Im und am Fahrzeug installierte Sensoren ermitteln kontinuierlich Fahrzeugsensorwerte, welche sowohl den Zustand des Fahrzeuges (z.B. Position, Geschwindigkeit, gefahrene Strecke, Routeninformation, Alter, etc.) als auch den Zustand des Fahrers und Mitfahrenden (z.B. Aufmerksamkeitslevel, Fahrstil, etc.) beschreiben. Gemäß der Erfindung werden nun innerhalb der Flotte von gleichartigen Fahrzeugen mit einer inhomogenen Gruppe von Fahrzeugnutzern für jedes der Fahrzeuge ein erste zumindest mittelbar von einer ganzzahligen Anzahl n aufgezeichneter Fahrzeugsensorwerte abhängende Größe und eine zweite zumindest mittelbar von einer ganzzahligen Anzahl m gegenwärtiger Fahrzeugsensorwerte abhängende Größe erfasst.

Für jedes Fahrzeug der Flotte werden also die zwei Größen bestimmt. Die erste Größe ist eine charakteristische Menge von bis zu n Fahrzeugsensorwerten und wird aus aufgezeichneten Fahrzeugsensorwerten bestimmt. Sie ist zeitlich annäherungsweise konstant (z.B. Lastkollektivdaten), sodass man hier von einer statischen Größe sprechen kann. Im Grenzfall kann die Größe auch nur einem einzigen Sensorwert direkt entsprechen. Daneben ist die zweite Größe eine charakteristische Menge von bis zu m Fahrzeugsensorwerten. Sie wird aus den gegenwärtigen Fahrzeugsensorwerten bestimmt und ändert sich zeitlich dynamisch (z.B. Position, Geschwindigkeit, Beschleunigung, etc.), sodass man hier von einer dynamischen Größe sprechen kann. Auch diese Größe kann im Grenzfall nur einem einzigen Sensorwert direkt entsprechen.

Die erste Größe, insbesondere wenn sie auf einer Vielzahl von Fahrzeugsensorwerten basiert, ermöglicht dabei gleichsam eines Fingerabdrucks die Identifikation jedes Fahrzeuges, da diese Größe auf individuellem Fahrzeug- und Nutzungsverhalten basiert und zeitlich wenig variiert. Daher sind diese ersten Größen aus der Perspektive des Datenschutzes besonders schützenswert. Die zweiten Größen spiegeln dahingegen derzeitige, aktuelle Daten des Fahrzeuges und seiner Nutzung wieder. Eine Identifikation des Fahrzeuges ist nur indirekt möglich (beispielsweise durch Kombination von Geolokation und lokalen Bildinformationen).

Nun werden für die erste Größe mehrerer oder aller Fahrzeuge der Flotte Ähnlichkeiten bestimmt, wonach die Fahrzeuge in eine bezüglich der Ähnlichkeit der zumindest einen Größe ähnliche Klasse oder eine unähnliche Klasse eingeteilt werden. Im Besonderen ist es möglich Fahrzeuge mit ähnlichen Fahrzeugsensorwerten in der ersten und/oder zweiten Größe zu bestimmen. Eine bevorzugte Ausgestaltung der Erfindung verwendet hierfür Clustering-Mechanismen des maschinellen Lernens (z.B. K-Means, Mean-Shift oder Expectation-Maximization (EM) Clustering), um ein Ähnlichkeitsmaß für die erste und/oder die zweite Größe zu generieren. Hierbei werden zumindest die Ähnlichkeiten in der zweiten Größe kontinuierlich bestimmt, da sich diese in der Flotte mit der Zeit ändert.

Nun kann im Falle einer Anforderung einer fahrzeugexternen Serviceleistung anstelle der die für die Servicedienstleitung relevanten Informationen enthaltenden Größe des anfordernden Fahrzeugs die entsprechende Größe eines Fahrzeugs aus der Klasse der ähnlichen Fahrzeuge, eine rechnerisch ermittelte Größe aus den entsprechenden Größen mehrerer Fahrzeuge aus der Klasse der ähnlichen Fahrzeuge oder eine künstlich erzeugte ähnliche Größe übertragen werden.

Damit wird ein "privacy-layer" geschaffen, welcher im einfachsten Fall anstelle der echten Informationen des Fahrzeugs für die entsprechende fahrzeugexterne Serviceleistung ausreichend ähnliche Informationen eines anderen Fahrzeugs der Flotte verwendet. In einer weiteren Ausgestaltung können relevante Informationen über eine Gruppe von relevanten Informationen ähnlicher Fahrzeuge ermittelt, beispielsweise gemittelt, oder künstlich generiert werden.

Beim Aufruf einer fahrzeugexternen Serviceleistung durch ein erstes Fahrzeug werden also für diese Serviceleistung relevante Informationen aus den Größen ähnlicher Fahrzeuge aus deren Größen ermittelte (z.B. durch Mittelung) oder künstlich generierte Daten übermittelt.

Daneben ist es typischerweise so, dass im Allgemeinen nicht alle Informationen die an den Anbieter der fahrzeugexternen Serviceleistung gesendet werden benötigt werden, um die Serviceleistung zu erbringen, sondern vielmehr werden eine Vielzahl von für die Serviceleistung irrelevanter Informationen an den Anbieter der fahrzeugexternen Serviceleistung übermittelt, sodass diese zusätzlichen Informationen als Mehrwehrt vom Anbieter der fahrzeugexternen Serviceleistung monetarisiert werden können. Typischerweise ist es dabei so, dass diese Informationen auf der jeweils anderen Größe basieren. Gemäß einer sehr vorteilhaften Weiterbildung des Verfahrens gemäß der Erfindung kann es daher vorgesehen sein, dass anstelle dieser anderen Größe des anfordernden Fahrzeugs die entsprechende Größe eines Fahrzeugs aus der Klasse der unähnlichen Fahrzeuge, eine rechnerisch ermittelte Größe aus den entsprechenden Größen mehrerer Fahrzeuge aus der Klasse der unähnlichen Fahrzeuge oder eine künstlich erzeugte ähnliche Größe übertragen wird.

Somit wir ein "privacy-layer" realisiert, welcher die Informationen des Fahrzeuges durch für die fahrzeugexterne Serviceleistung relevante Informationen ähnlicher Fahrzeuge und irrelevante Informationen unähnlicher Fahrzeuge ersetzt und somit die schützenswerten eigentlichen Informationen des Fahrzeuges verschleiert.

Die künstlich erzeugte Größe, welche in beiden Fällen möglich ist, aber vor allem bei den weniger relevanten Informationen eine entscheidende Rolle spielt, kann dabei gemäß einer vorteilhaften Ausgestaltung der Erfindung über generativen Verfahren des maschinellen Lernens erzeugt werden.

Hierfür können Modelle trainiert werden, die darauf optimiert werden möglichst "realistische" Größen zu erzeugen, welche dann für zufällige, insbesondere zweite, Größen genutzt werden können. Dieser "Realismus" erfolgt durch Einsatz geeigneter Funktionen, welche entweder generisch oder abhängig von den Serviceleistungen, die das Fahrzeug nutzen möchte, definiert werden. So lassen sich auch inhaltliche Schwerpunkte der n, oder insbesondere m, Fahrzeugsensorwerte setzen.

Die zumindest mittelbar von einer ganzzahligen Anzahl von Fahrzeugsensorwerten abhängenden Größen, also die erste Größe und die zweite Größe, können dabei gemäß einer sehr vorteilhaften Ausgestaltung des erfindungsgemäßen Verfahrens als Menge der n oder m Fahrzeugsensorwerte gebildet werden. Die Größe besteht also aus einer entsprechenden Menge oder, sofern eine konkrete Anordnung der Sensorwerte in einer vorgegebenen Reihenfolge gewünscht ist, auch aus einem n-Tupel bzw. m-Tupel.

Eine alternative Ausgestaltung der jeweiligen Größe kann es vorsehen, dass die jeweilige Größe als ein auf den jeweiligen Fahrzeugsensorwerten basierender Vektor im n- bzw. m-dimensionalen Raum gebildet wird.

Es werden also für jedes Fahrzeug der Flotte zwei Vektoren bestimmt, als erste Größe ein charakteristischer n-dimensionaler Vektor, welcher aus den aufgezeichneten Fahrzeugsensorwerten bestimmt wird. Der der zweiten Größe entsprechende zweite Vektor wäre dann ein m-dimensionaler Vektor, welcher aus den gegenwärtigen Fahrzeugsensorwerten bestimmt wird.

Insbesondere der erste Vektor ermöglicht dabei gleichsam eines Fingerabdrucks eine sehr einfache Identifikation jedes Fahrzeugs und ist somit besonders schützenswert. Der zweite Vektor spiegelt im Wesentlichen aktuelle Werte des Fahrzeugs während der Nutzung wieder und ist hier hinsichtlich des Datenschutzes weniger schützenswert.

Gemäß einer weiteren sehr günstigen Ausgestaltung des erfindungsgemäßen Verfahrens können die beiden Größen, als Weiterbildung ihrer Ausgestaltung als Vektoren, auch in der Art realisiert werden, dass die jeweilige Größe als eine Abbildung des jeweiligen Vektors auf einen Wert mit kleinerer oder maximal gleicher Zahl der Dimensionen gebildet wird. Die Abbildung kann vorzugsweise eine Raumdimensionsreduktion darstellen. Mittels einer geeigneten Abbildung wie beispielsweise einer Hauptkomponentenanalyse, welche gemäß des englischen Begriffs "Principal Component Analysis" PCA bezeichnet wird, oder auch über eine Abbildung durch ein tiefes neuronales Netz kann aus dem Vektor mit den n bzw. m Dimensionen ein entsprechender Wert mit n' bzw. m' Dimensionen erzeugt werden. Die Zahl der Dimensionen nimmt dabei vorzugsweise ab oder ist maximal gleich wie die Zahl der vorherigen Dimensionen, nimmt also nie zu. Dadurch, dass nun der Vektor mit n bzw. m Dimensionen in einen Raum mit n' bzw. m' Dimensionen abgebildet wird, wird er auf eine gewisse Weise komprimiert und verschlüsselt, sodass bereits von diesem neuen Wert nicht mehr direkt auf den vorhergehenden Vektor bzw. die diesen Vektor zugrunde liegenden Fahrzeugsensorwerte rückgeschlossen werden kann. Wenn die Anbieter von fahrzeugexternen Serviceleistungen also in der Lage sind derartige Vektoren oder vorzugsweise aus den Vektoren erzeugte abgebildete Werte zur Bereitstellung ihrer Serviceleistungen zu verarbeiten, kann alleine hierdurch bereits eine gewisse Anonymisierung erreicht werden. Wird diese zusätzlich mit der oben beschriebenen Funktion des "privacy-layer" kombiniert werden, so wird ein sehr guter Datenschutz durch die Übertragung relevanter ähnlicher und im Bedarfsfall weniger relevanter unähnlicher Informationen erreicht.

Gemäß einer sehr günstigen Ausgestaltung des erfindungsgemäßen Verfahrens kann es nun ferner vorgesehen sein, dass zum Ermitteln der Klassen ähnlicher und unähnlicher Größen Clustering-Mechanismen des maschinellen Lernens verwendet werden, um ein Ähnlichkeitsmaß zu ermitteln, wobei die Größen anhand eines Vorgabewerts und eines Vergleichs des ermittelten Ähnlichkeitsmaßes mit diesen Vorgabewert klassifiziert werden. Diese vorteilhafte Ausgestaltung des erfindungsgemäßen Verfahrens verwendet also Clustering-Mechanismen des maschinellen Lernens. Diese können beispielsweise K-Means, Mean-Shift oder Expectation-Maximization (EM) Clustering umfassen. Über solche Mechanismen lässt sich dann ein Ähnlichkeitsmaß für die erste Größe und/oder die zweite Größe beispielsweise als Vektor oder Abbildung des jeweiligen Vektors generieren. Anhand eines Vorgabewerts lässt sich dann das ermittelte Ähnlichkeitsmaß über diesen Vorgabewert klassifizieren. Liegt das Ähnlichkeitsmaß beispielsweise zwischen 0 und 100 Prozent, so kann über einen Vorgabewert von beispielsweise 80% zwischen unähnlichen Informationen, welche dann zwischen 0 und 80% liegen oder ausreichend ähnlichen Informationen zwischen 80 und 100% unterschieden werden.

Dabei kann je nach fahrzeugexterner Serviceleistung gemäß einer sehr vorteilhaften Ausgestaltung des erfindungsgemäßen Verfahrens der Vorgabewert variieren. Andere Möglichkeiten den Wert zu variieren oder zu parametrisieren bieten beispielsweise die Daten des relevanten Fahrzeugsensors oder auch dessen Absolutwert, da beispielsweise bei niedrigen Geschwindigkeiten andere Ähnlichkeiten genutzt werden können, als bei entsprechend schnellen Geschwindigkeiten. Ein Beispiel könnte hier eine Wetterapp sein, welche bezüglich der genauen Position mit einer relativ geringen Ähnlichkeit auskommt, sodass eine Bestimmung der Position auf wenige Kilometer oder hundert Meter genau bei weitem ausreicht. Falls es sich bei der fahrzeugexternen Serviceleistung jedoch um ein Navigationssystem handelt, wäre eine solche Angabe bezüglich der Position natürlich nicht ausreichend, hierfür ist eine weitaus höhere Ähnlichkeit der Werte erforderlich.

Eine weitere sehr günstige Variante des Verfahrens gemäß der Erfindung sieht es vor, dass die Größen zumindest teilweise zwischen den Fahrzeugen und einem zentralen Rechenzentrum ausgetauscht werden, wobei die Aggregierung und Auswertung der Informationen in dem zentralen Rechenzentrum erfolgt. Informationen aus und zu Fahrzeugen der Flotte können also über ein Rechenzentrum, insbesondere eine Cloud, ausgetauscht und die Informationen im Rechenzentrum/Cloud aggregiert und ausgewertet werden. Alternativ oder zusätzlich dazu kann es gemäß der Erfindung auch vorgesehen sein, dass die Größen zumindest teilweise zwischen den Fahrzeugen der Flotte ausgetauscht, aggregiert und ausgewertet werden. Bei diesem zweiten Ansatz können Information dezentralisiert in der Fahrzeugflotte durch Informationsaustausch zwischen den Fahrzeugen der Flotte aggregiert und ausgewertet werden. Hierbei ist es vorteilhafter Weise möglich das Fahrzeuge dezentral mit anderen Fahrzeugen in der Nähe direkt kommunizieren können, im Besonderen mit Fahrzeugen mit ähnlichen dynamischen Werten (d.h. mit Fahrzeugen, welche ähnliche derzeitige Werte (z.B. Position, Geschwindigkeit, Beschleunigung, etc.) haben, da sie am gleichen Ort z.B. in die gleiche Richtung fahren.

Während erstere Lösung Datentransferzeiten und Latenzen reduziert, kann eine dezentrale Informationsverarbeitung die Datensicherheit erhöhen (da kein zentraler Ort alle Informationen der Flotte speichert) und ist robust gegenüber dem Ausfall einzelner, insbesondere des zentralen Knotens. Dabei können die beiden Lösungen auch kombiniert werden, sodass teilweise zentral und teilweise dezentral agiert wird.

Gemäß einer sehr vorteilhaften Ausgestaltung der Idee kann zur Ermittlung der Unterscheidung zwischen für die fahrzeugexterne Serviceleistung relevanten und weniger relevanten Informationen von zumindest einigen der Fahrzeuge der Flotte Informationen mit ähnlicher erster Größe und Informationen mit jeweils unähnlicher zweiter Größe an die fahrzeugexterne Serviceleistung gesandt werden, wonach die Serviceleistung ausgewertet wird. Hierbei wird die Fahrzeugflotte also genutzt, um fahrzeugexternen Serviceleistungen dahingehend zu testen welche Informationen relevant für die Ergebnisse der Serviceleistung sind (Profiling). Hierzu wird eine Vielzahl von orchestrierten Anfragen mit ersten und zweiten Größen an den Anbieter der fahrzeugexternen Serviceleistungen gesendet, welche den möglichen Wertebereich der Anfrage abdecken. Die vom Anbieter der fahrzeugexternen Serviceleistungen übermittelten Antworten auf die Anfragen werden im Rechenzentrum/Cloud und/oder in der Flotte auf Ähnlichkeit analysiert.

Zunächst werden hierzu von einer Gruppe von Fahrzeugen aus der Flotte Anfragen an den Anbieter der fahrzeugexternen Serviceleistungen gesendet, welche ähnliche Daten in einer der beiden Größen aber verschiedenen Daten in der jeweiligen anderen Größe haben. Somit lässt sich ermitteln, ob eine der Größen alleine ausreicht um die fahrzeugexterne Serviceleistung zu nutzen.

Eine sehr vorteilhafte Ausgestaltung dieses Verfahrens sieht es dann vor, dass danach einzelne Fahrzeugsensorwerte festgehalten und andere Fahrzeugsensorwerte randomisiert werden, um für die Nutzung der jeweiligen fahrzeugexternen Serviceleitung relevante und weniger relevante Fahrzeugsensorwerte zu ermitteln. Aufbauend auf der oben beschriebenen Abfrage werden nun also einzelne Daten oder Datengruppen aus den Größen festgehalten und die restlichen Daten bei der Anfrage randomisiert, um zu einer finalen Gruppe von für die fahrzeugexterne Serviceleistung relevanter Informationen zu kommen. So ist es außerdem möglich, möglichst maximal von der jeweiligen Größe entfernte Wertebereiche durch den "privacy-layer" auszunutzen.

Das erfindungsgemäße Verfahren eignet sich nun also insbesondere für die Nutzung in Fahrzeugen einer Fahrzeugflotte von im Wesentlichen gleichartigen Fahrzeugen, also beispielsweise einer Flotte von privat genutzten Personenwagen, als Dienstwagen genutzten Personenwagen, Fahrzeugen einer Marke oder eines Marken-Verbunds, Nutzfahrzeugen oder dergleichen. Das erfindungsgemäße Fahrzeug ist dabei mit einer Vielzahl von Sensoren und wenigstens einer Kommunikationsschnittstelle, welcher zur Durchführung des Verfahrens zusammen mit anderen Fahrzeugen und/oder einem externen Rechenzentrum eingerichtet ist, ausgestattet.

Weitere vorteilhafte Ausgestaltungen des erfindungsgemäßen Verfahrens sowie zur Durchführung des erfindungsgemäßen Verfahrens eingerichteter Fahrzeuge ergeben sich auch aus dem Ausführungsbeispiel, welches nachfolgend unter Bezugnahme auf die Figuren näher beschrieben ist.

Dabei zeigen:
- Fig. 1: ein grundlegendes Szenario zur Anwendung des erfindungsgemäßen Verfahrens;
- Fig. 2: eine beispielhafte zweidimensionale Repräsentation von Fahrzeuginformationen;
- Fig.3: eine beispielhafte ein-dimensionale Kompression der Repräsentation aus Fig. 2;
- Fig. 4: eine erste mögliche Ausführungsform zur Realisierung des erfindungsgemäßen Verfahrens; und
- Fig. 5: eine zweite mögliche Ausführungsform zur Realisierung des erfindungsgemäßen Verfahrens.

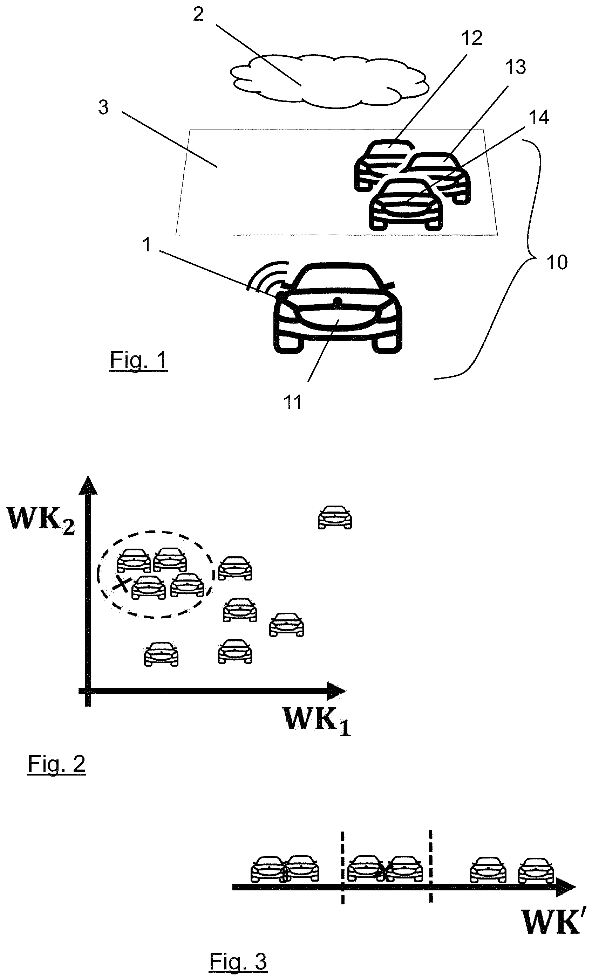

In der Darstellung der Figur 1 ist ein erstes Fahrzeug 11 gezeigt, welches eine Vielzahl von nicht dargestellten Sensoren sowie eine Kommunikationsschnittstelle 1 aufweisen soll, über welche eine Kommunikationsverbindung zu einer mit 2 bezeichneten Cloud aufgebaut werden kann, über welche ein Anbieter von fahrzeugexternen Serviceleistungen FES seine Serviceleistungen zur Verfügung stellt. Zwischen dem Fahrzeug 11 und der Cloud 2 des Anbieters der FES befindet sich ein mit 3 bezeichneter "privacy-layer", in welchem die Fahrzeugdaten für die Nutzung der FES durch das Fahrzeug 11 anonymisiert werden. Hierzu dienen Fahrzeugdaten von weiteren mit 12, 13, 14 bezeichneten Fahrzeugen einer Flotte 10 von gleichartigen Fahrzeugen 11, 12, 13, 14 mit einer inhomogenen Gruppe von Fahrzeugnutzern.

In einer solchen Flotte 10 von gleichartigen Fahrzeugen 11, 12, 13, 14 sowie einer damit einhergehenden großen inhomogenen Gruppe von Fahrzeugnutzern ist es so, dass mit einer sehr großen Wahrscheinlichkeit ähnliche Fahrzeugdaten in Form von Nutzungsprofilen existieren. Diese macht man sich nun zunutze, um den hier angedeuteten privacy-layer 3 zu realisieren.

In und an dem jeweiligen Fahrzeug 11, 12, 13, 14 der Fahrzeugflotte 10 installierte Fahrzeugsensoren ermitteln kontinuierlich Fahrzeugsensorwerte, welche sowohl den Zustand des Fahrzeugs 11, 12, 13, 14, beispielsweise seine Position, seine Geschwindigkeit, die gefahrene Strecke, Routeninformationen, aber auch Informationen über das Alter, die Abnutzung, anstehende Serviceintervalle oder dergleichen enthalten. Ferner können über die Sensoren auch die Zustände einer das Fahrzeug 11, 12, 13, 14 fahrenden Person oder mitfahrender Personen ermittelt werden, beispielsweise indem der Fahrstil erfasst wird, aber auch indem über ein Aufmerksamkeitsüberwachungsmodul ein Aufmerksamkeitslevel der das Fahrzeug fahrenden Person erfasst wird. Hierzu werden beispielsweise die Lidschlagfrequenz und/oder andere Körperdaten ausgewertet.

Für jedes der Fahrzeuge 11, 12, 13, 14 werden nun zwei charakteristische Vektoren bestimmt. Diese stellen die hier beispielhaft beschriebenen zumindest mittelbar von den Sensorwerten abhängenden Größen der Erfindung dar, und ließen sich prinzipiell auch durch eine Menge der Sensorwerte ersetzen. Im nachfolgenden Ausführungsbeispiel wird jedoch im Wesentlichen auf eben diese Vektoren als die Größen eingegangen.

Für jedes Fahrzeug der Flotte werden also zwei Vektoren bestimmt, ein charakteristischer statischer n-dimensionaler Wert WK, welcher aus den aufgezeichneten Fahrzeugsensorwerten bestimmt wird, und welcher zeitlich annäherungsweise konstant ist. Hierbei kann es sich beispielsweise um Lastkollektivdaten handeln. Ein zweiter Vektor wird als dynamischer m-dimensionaler Wert WZ aus den gegenwärtigen Fahrzeugsensorwerten bestimmt, beispielsweise der Position, der Geschwindigkeit, der Beschleunigung und der dergleichen. Er wird sich zeitlich entsprechend kontinuierlich verändern.

Vor allem der erste Vektor WK ermöglicht nun eine Identifikation des jeweiligen Fahrzeugs 11,12,13,14 der Fahrzeugflotte 10, da dieser Wert auf individuellen Fahrzeugdaten und dem Nutzungsverhalten eines Nutzers des Fahrzeugs basiert. Er wird sich zeitlich wenig verändern, sodass er aus Datenschutzperspektive besonders schützenswert ist. Der zweite Vektor WZ spiegelt dahingegen aktuelle Werte des Fahrzeugs 11,12,13,14 und seiner Nutzung wider. Eine Identifikation des Fahrzeugs 11,12,13,14 über diesen Wert ist nur indirekt möglich, beispielsweise indem eine Kombination von Positionsdaten mit lokalen Bildinformationen erfolgt oder dergleichen. Es ist damit aus Sicht des Datenschutzes etwas weniger schützenswert als der erste Vektor.

Vorzugsweise lassen sich diese beiden Vektoren WK, WZ nun mittels eine Raumdimensionsreduktion, z.B. durch geeignete Abbildungen, wie PCA, ein tiefes neuronales Netzwerk oder dgl. verarbeiten. Aus WK_n mit n Dimension wird so der Raum WK` mit n' Dimension. Dabei gilt n' <= n. Damit wird der Raum WK mit n Dimensionen in einen Raum WK' mit n' Dimensionen abgebildet und somit auf eine gewissen Weise komprimiert und verschlüsselt. Mit WZ kann dann analog vorgegangen werden.

Im Besonderen ist es möglich Fahrzeuge 11,12,13,14 ähnlicher Sensorwerte in WK'-und/oder WZ'-Raum zu bestimmen. Eine beispielhafte konkrete Ausgestaltung verwendet Clustering-Mechanismen des Maschinellen Lernens (z.B. K-Means, Mean-Shift oder Expectation-Maximization (EM) Clustering), um ein Ähnlichkeitsmaß für im WK- und/oder WZ-Raum zu generieren. Hierbei werden Ähnlichkeiten im WZ bzw. WZ' Raum kontinuierlich bestimmt, da sich diese Werte in der Flotte 10 mit der Zeit ändern.

In der Darstellung der Figur 2 ist dementsprechend eine beispielhafte zwei-dimensionale WK Repräsentation von ähnlichen und unähnlichen Fahrzeuginformationen dargestellt. Die ähnlichen Fahrzeuginformationen sind durch die gestrichelte Umrandung mit dem Kreuz symbolisiert. Diese Ähnlichkeiten werden mittels der beschriebenen Clustering Mechanismen ermittelt. Sie basieren hier rein beispielhaft auf einem zwei-dimensionalen ersten Vektor WK und können selbstverständlich für den entsprechenden zweiten Vektor WZ analog dargestellt werden. Die Zahl der Dimensionen kann dabei weitaus höher sein als die hier dargestellten zwei Dimensionen, diese eignen sich jedoch insbesondere für die grafische Darstellung besonders gut.

In der Darstellung der Figur 3 ist dementsprechend die ein-dimensionale Kompression der Darstellung in Figur 2 zu erkennen. Hier wird also die Raumdimensionsreduktion bzw. Abbildung WK' entsprechend dargestellt. Auch hier sind die ähnlichen Fahrzeuge 11,12,13,14 bzw. Fahrzeuginformationen wiederum zwischen den gestrichelten Linien dargestellt und mit einem Kreuz gekennzeichnet, während die außerhalb dieser gestrichelten Linien, also rechts und links daneben liegenden Fahrzeugdaten, ohne zusätzliche Markierung die unähnlichen Fahrzeugdaten sind.

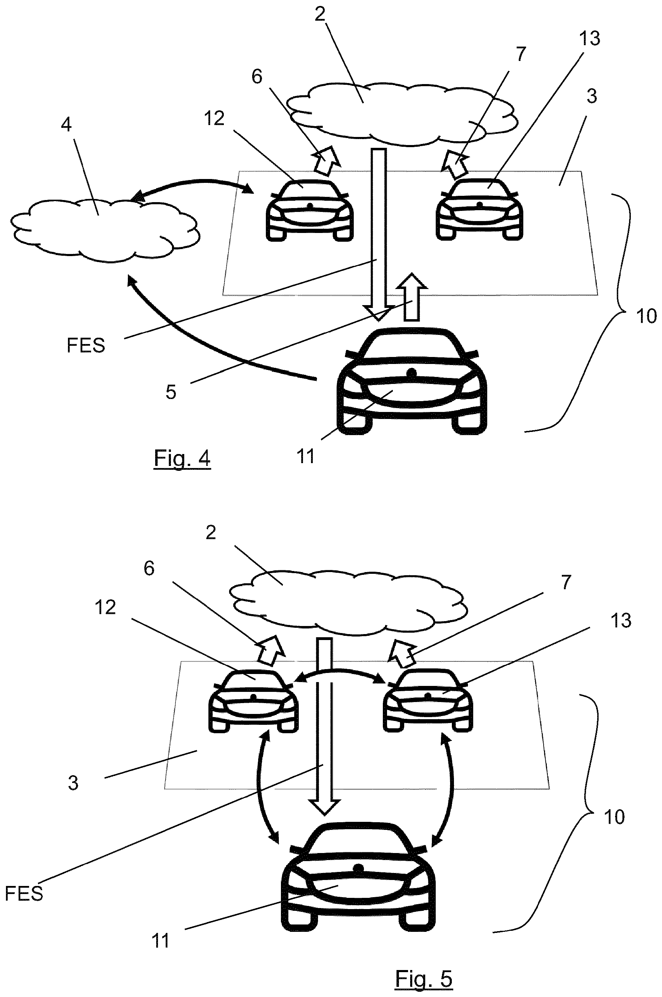

In einer ersten Variante gemäß der Darstellung in Figur 4 können Informationen aus und zu Fahrzeugen 11,12,13,14 der Flotte 10 über ein Rechenzentrum/eine Cloud 4 ausgetauscht und die Informationen im Rechenzentrum/der Cloud 4 aggregiert und ausgewertet werden. Dieses zentrale Rechenzentrum 4 stellt dabei eine Vertrauenswürde Instanz dar. Es kann sich dabei z.B. um einen Backendserver des Fahrzeugherstellers handeln.

Beim Aufruf der fahrzeugexternen Serviceleistungen FES durch das erstes Fahrzeug 11, werden anstelle von dessen Fahrzeuginformationen 5 die für diese Leistung relevante Fahrzeuginformationen 6 aus den WK oder WZ ähnlicher Fahrzeuge 12, oder aus deren WK oder WZ ermittelte (z.B. durch Mittelung) Informationen 6 übermittelt. Bei für die Leistung irrelevanten Fahrzeuginformationen 5 des Fahrzeugs 11 werden statt der eigenen Fahrzeuginformationen 5 diejenigen Fahrzeuginformationen 7 aus den WK und WZ unähnlicher Fahrzeuge 13 oder zufällige Werte übermittelt werden. Somit wir der "privacy-layer" realisiert, welcher die Informationen 5 des Fahrzeuges 11 durch für die FES relevante Informationen 6 ähnlicher Fahrzeuge 12 und irrelevante Informationen 7 unähnlicher Fahrzeuge 13 ersetzt und somit die eigentlichen Informationen 5 des Fahrzeuges verschleiert.

Zur Verfeinerung der künstlichen Erzeugung von zufälligen WZ können generativen Verfahren des maschinellen Lernens (z.B. adversarial networks, decoder-encodernetworks) zum Einsatz kommen. Hierfür werden Modelle trainiert, die darauf optimiert werden möglichst "realistische" Zielvektoren zu erzeugen, welche dann für zufällige WZ Werte genutzt werden können. Dieser "Realismus" erfolgt durch Einsatz geeigneter Funktionen, welche entweder generisch oder abhängig von den Services, die der Fahrzeugführer nutzen möchte, definiert werden. So lassen sich auch inhaltliche Schwerpunkte der m Dimensionen setzen.

In einer weiteren Ausführungsform könnte den FES nur der Zugriff auf den Raum WK' bzw. WZ' sowie die Abbildungsvorschrift erlaubt werden. Hierdurch können nutzerspezifischen Werte von WK nicht ohne weiteres Wissen reproduzieren werden, da die Informationen in WK' komprimiert vorliegen (vergl. Figur 3) und eine nicht umkehrbar Abbildung verwendet wird. Hierbei ist es wichtig für die Dimensionsreduktion der Räume WK bzw. WZ auf WK' bzw. WZ', die Informationen eine Vielzahl von Fahrzeugen 11.12,13,14, zu kombinieren, um eine hinreichende gute Komprimierung zur erreichen und ähnliche Fahrzeuge 11, 12 in diesem Raum zu identifizieren und somit die Anonymität zu gewährleisten.

Alternativ oder zusätzlich können Information 5 dezentralisiert in der Fahrzeugflotte 10 durch Informationsaustausch zwischen den Fahrzeugen 11, 12 ,13 der Flotte aggregiert und ausgewertet werden. Dies ist analog zur Darstellung in Figur 4 in Figur 5 gezeigt. Während erstere Lösung Datentransferzeiten und Latenzen reduziert, kann eine dezentrale Informationsverarbeitung die Datensicherheit erhöhen (da kein zentraler Ort alle Informationen der Flotte 10 speichert) und ist robust gegenüber dem Ausfall einzelner, insbesondere des zentralen Knotens.

Im Folgenden wird die Fahrzeugflotte 10 genutzt, um die FES dahingehend zu testen welche Informationen relevant für die Ergebnisse der Serviceleistung sind. Hierzu wird eine Vielzahl von orchestrierten Anfragen mit Werten WK und WZ an den Anbieter bzw. die Cloud 2 gesendet, welche den möglichen Wertebereich der Anfrage abdecken. Die vom FES übermittelten Antworten auf die Anfragen werden im Rechenzentrum/der Cloud 4 und/oder in der Flotte 10 auf Ähnlichkeit analysiert. Zunächst werden hierzu von einer Gruppe von Fahrzeugen 11, 12, 13, 14 aus der Flotte 10 Anfragen an den FES gesendet, welche ähnliche Werte in einer der beiden Wertebereichen (WK oder WZ) aber verschiedenen Werte in dem jeweiligen anderen Wertebereich haben. Somit lässt sich ermitteln, ob Werte einer Kategorie alleine ausreicht um den FES zu nutzen. Hierauf Aufbauend werden einzelne Werte oder Wertgruppen aus WK und WZ festgehalten und die restlichen Werten bei der Anfrage randomisiert, um zu einer finalen Gruppe von für die FES Nutzung relevanter Fahrzeuginformationen zu kommen. So ist es außerdem möglich, möglichst maximal von WK-entfernte Wertebereiche auszunutzen.

In einem Anwendungsbeispiel einer von einem FES zur Verfügung gestellten Wetterapp, werden die für die FES Anwendung relevanten Informationen durch die orchestrierte Flottenabfrage bestimmt. Hierbei werden die Positionsdaten und die im Navigationssystem hinterlegte Zieladresse sowie die vom Navigationssystem prognostizierte Ankunftszeit als relevante Informationen erkannt. Nutzt nun ein erstes Fahrzeug 11 die Wetterapp, so werden nicht die Positionsdaten des ersten Fahrzeugs 11, sondern eines zweiten Fahrzeugs 12 aus der Klasse mit ähnlichen Positionsdaten oder generierte Positionsdaten aus der Mittelung von Fahrzeugen 12 aus der Klasse mit ähnlichen Positionsdaten übermittelt. Ebenso wird nicht die Zieladresse des ersten Fahrzeugs 11, sondern die Zieladresse eines dritten Fahrzeugs 12 aus der Klasse mit einer ähnlichen Zieladresse oder eine über eine Anzahl ähnlicher dritten Fahrzeuge 13 gemittelte Zieladresse an die Wetterapp übermittelt. Ebenso wird die Ankunftszeit am Zielort von einem vierten Fahrzeug 12 mit ähnlicher Ankunftszeit oder gemittelte Ankunftszeiten einer Klasse von ähnlichen Fahrzeugen 12 verwendet. Für die, für die Nutzung der FES irrelevanten Daten, können gerade solche Daten von anderen Fahrzeugen 13 (oder aus diesen gemittelte Daten) in der Klasse verwendet werden, welche keine Ähnlichkeit mit dem ersten Werten des ersten Fahrzeugs 11 aufweisen.

## Patentansprüche

1. Verfahren zur Anonymisierung von Fahrzeugdaten für die Nutzung fahrzeugexterner Serviceleistungen (FES),
**dadurch gekennzeichnet, dass**
innerhalb einer Flotte (10) von gleichartigen Fahrzeugen (11,12,13,14) mit einer inhomogenen Gruppe von Fahrzeugnutzern für jedes der Fahrzeuge (11,12,13,14) ein erste zumindest mittelbar von einer ganzzahligen Anzahl n aufgezeichneter Fahrzeugsensorwerte abhängende Größe und eine zweite zumindest mittelbar von einer ganzzahligen Anzahl m gegenwärtiger Fahrzeugsensorwerte abhängende Größe erfasst wird, wobei für zumindest eine der Größen mehrerer oder aller Fahrzeuge (11,12,13,14) der Flotte (10) Ähnlichkeiten bestimmt werden, wonach die Fahrzeuge (11,12,13,14) in eine bezüglich der Ähnlichkeit der zumindest einen Größe ähnliche Klasse oder eine unähnliche Klasse eingeteilt werden, wobei im Falle einer Anforderung einer fahrzeugexternen Serviceleistung (FES) anstelle der die für die Servicedienstleitung relevanten Informationen enthaltenden Größe des anfordernden Fahrzeugs (11) die entsprechende Größe eines Fahrzeugs (12) aus der Klasse der ähnlichen Fahrzeuge (12), eine rechnerisch ermittelte Größe aus den entsprechenden Größen mehrere Fahrzeuge (12) aus der Klasse der ähnlichen Fahrzeuge (12) oder eine künstlich erzeugte ähnliche Größe übertragen wird.

2. Verfahren nach Anspruch 1,
**dadurch gekennzeichnet, dass**
für den Fall, dass die fahrzeugexterne Serviceleistung (FES) weitere für die Durchführung der Serviceleistung weniger relevante Informationen benötigt, welche auf der jeweils anderen Größe basieren, anstelle dieser Größe des anfordernden Fahrzeugs (11) die entsprechende Größe eines Fahrzeugs (13) aus der Klasse der unähnlichen Fahrzeuge (13), eine rechnerisch ermittelte Größe aus den entsprechenden Größen mehrerer Fahrzeuge (13) aus der Klasse der unähnlichen Fahrzeuge (13) oder eine künstlich erzeugte ähnliche Größe übertragen wird.

3. Verfahren nach Anspruch 1 oder 2,
**dadurch gekennzeichnet, dass**
die zufällige Größe über generativen Verfahren des maschinellen Lernens erzeugt wird.

4. Verfahren nach einem der Ansprüche 1, 2 oder 3,
**dadurch gekennzeichnet, dass**
die jeweilige Größe als Menge der n oder m Fahrzeugsensorwerte gebildet wird.

5. Verfahren nach einem der Ansprüche 1, 2 oder 3,
**dadurch gekennzeichnet, dass**
die jeweilige Größe als ein auf den jeweiligen Fahrzeugsensorwerten basierender Vektor (WK, WZ) im n- bzw. m-dimensionalen Raum gebildet wird.

6. Verfahren nach Anspruch 5,
**dadurch gekennzeichnet, dass**
die jeweilige Größe als eine Abbildung des jeweiligen Vektors (WK, WZ) auf einen Wert (WK', WZ') mit kleinerer oder maximal gleicher Zahl der Dimensionen gebildet wird.

7. Verfahren nach einem der Ansprüche 1 bis 6,
**dadurch gekennzeichnet, dass**
zum Ermitteln der Klassen ähnlicher und unähnlicher Größen Clustering-Mechanismen des maschinellen Lernens verwendet werden, um ein Ähnlichkeitsmaß zu ermitteln, wobei die Größen anhand eines Vorgabewerts und eines Vergleichs des ermittelten Ähnlichkeitsmaßes mit diesen Vorgabewert klassifiziert werden.

8. Verfahren nach Anspruch 7,
**dadurch gekennzeichnet, dass**
der Vorgabewert in Abhängigkeit des relevanten Fahrzeugsensorwerts, dessen Absolutwerts und/oder der fahrzeugexternen Serviceleistung (FES) parametrisiert oder festgelegt wird.

9. Verfahren nach einem der Ansprüche 1 bis 8,
**dadurch gekennzeichnet, dass**
die Größen zumindest teilweise zwischen den Fahrzeugen (11,12,13,14) und einem zentralen Rechenzentrum (4) ausgetauscht werden, wobei die Aggregierung und Auswertung der Informationen in dem zentralen Rechenzentrum (4) erfolgt.

10. Verfahren nach einem der Ansprüche 1 bis 9,
**dadurch gekennzeichnet, dass**
die Größen zumindest teilweise zwischen den Fahrzeugen (11,12,13,14) der Flotte (10) ausgetauscht, aggregiert und ausgewertet werden.

11. Verfahren nach einem der Ansprüche 1 bis 10,
**dadurch gekennzeichnet, dass**
zur Ermittlung der Unterscheidung zwischen für die fahrzeugexterne Serviceleistung (FES) relevanten und weniger relevanten Informationen von zumindest einigen der Fahrzeuge (11,12,13,14) der Flotte (10) Informationen mit ähnlicher erster Größe und Informationen mit jeweils unähnlicher zweiter Größe an die fahrzeugexternen Serviceleistung (FES) gesandt werden, wonach die Serviceleistung ausgewertet wird.

12. Verfahren nach Anspruch 11,
**dadurch gekennzeichnet, dass**
danach einzelne Fahrzeugsensorwerte festgehalten und andere Fahrzeugsensorwerte randomisiert werden, um für die Nutzung der jeweiligen fahrzeugexternen Serviceleitung (FES) relevante und weniger relevante Fahrzeugsensorwerte zu ermitteln.

13. Fahrzeug (11,12,13,14) mit einer Vielzahl von Sensoren und wenigsten eines Kommunikationsschnittstelle (1), welcher zur Durchführung des Verfahrens zusammen mit anderen Fahrzeugen (11,12,13,14) und/oder einen externen Rechenzentrum (4) eingerichtet ist.

## Claims

1. Method for anonymizing vehicle data for the use of vehicle-external services (VES),
**characterized in that**
within a fleet (10) of vehicles (11, 12, 13, 14) of the same type with a heterogeneous group of vehicle users, for each of the vehicles (11, 12, 13, 14) a first quantity dependent at least indirectly on an integer number n of recorded vehicle sensor values and a second quantity dependent at least indirectly on an integer number m of current vehicle sensor values are acquired, with similarities being determined for at least one of the quantities of multiple or all vehicles (11, 12, 13, 14) of the fleet (10), according to which the vehicles (11, 12, 13, 14) are classified into a class which is similar with respect to the similarity of the at least one quantity or a dissimilar class, wherein, in the event of a vehicle-external service (VES) being requested, instead of the quantity of the requesting vehicle (11) which contains the information relevant for the service, the corresponding quantity of a vehicle (12) from the class of similar vehicles (12), a computationally ascertained quantity from the corresponding quantities multiple vehicles (12) from the class of similar vehicles (12) or an artificially generated similar quantity is transmitted.

2. Method according to claim 1,
**characterized in that**
in the event that the vehicle-external service (VES) requires further information that is less relevant for carrying out the service and is based on the relevant other quantity, instead of this quantity of the requesting vehicle (11), the corresponding quantity of a vehicle (13) from the class of dissimilar vehicles (13), a computationally ascertained quantity from the corresponding quantities of multiple vehicles (13) from the class of dissimilar vehicles (13), or an artificially generated similar quantity is transmitted.

3. Method according to claim 1 or 2,
**characterized in that**
the random quantity is generated using generative machine learning methods.

4. Method according to any of claims 1, 2 or 3,
**characterized in that**
the relevant quantity is formed as the set of the n or m vehicle sensor values.

5. Method according to any of claims 1, 2 or 3,
**characterized in that**
the relevant quantity is formed as a vector (WK, WZ) based on the respective vehicle sensor values in the n- or m-dimensional space.

6. Method according to claim 5,
**characterized in that**
the relevant quantity is formed as a mapping of the relevant vector (WK, WZ) to a value (WK', WZ') with a smaller number, or at most the same number, of dimensions.

7. Method according to any of claims 1 to 6,
**characterized in that**
to ascertain the classes of similar and dissimilar quantities, clustering mechanisms of machine learning are used to ascertain a similarity measure, the quantities being classified using a target value and a comparison of the ascertained similarity measure with this target value.

8. Method according to claim 7,
**characterized in that**
the target value is parameterized or set on the basis of the relevant vehicle sensor value, its absolute value and/or the vehicle-external service (VES).

9. Method according to any of claims 1 to 8,
**characterized in that**
the quantities are exchanged at least partially between the vehicles (11, 12, 13, 14) and a central data center (4), the information being aggregated and evaluated in the central data center (4).

10. Method according to any of claims 1 to 9,
**characterized in that**
the quantities are at least partially exchanged, aggregated and evaluated between the vehicles (11, 12, 13, 14) of the fleet (10).

11. Method according to any of claims 1 to 10,
**characterized in that**
to ascertain the distinction between information which is relevant and information which is less relevant for the vehicle-external service (VES) from at least some of the vehicles (11, 12, 13, 14) of the fleet (10), information having a similar first quantity and information having a dissimilar second quantity is sent to the vehicle-external service (VES), after which the service is evaluated.

12. Method according to claim 11,
**characterized in that**
thereafter, individual vehicle sensor values are established and other vehicle sensor values are randomized in order to ascertain vehicle sensor values which are relevant and vehicle sensor values which are less relevant for the use of the relevant vehicle-external service (VES).

13. Vehicle (11, 12, 13, 14) having a plurality of sensors and at least one communication interface (1), which is designed to carry out the method together with other vehicles (11, 12, 13, 14) and/or an external data center (4).

## Revendications

1. Procédé pour l'anonymisation de données de véhicule pour l'utilisation de prestations de services externes au véhicule (FES),
**caractérisé en ce que**
à l'intérieur d'une flotte (10) de véhicules (11, 12, 13, 14) de même type comportant un groupe non homogène d'utilisateurs de véhicules, une première grandeur dépendant au moins indirectement d'un nombre entier n de valeurs de capteur de véhicule enregistrées et une seconde grandeur dépendant au moins indirectement d'un nombre entier m de valeurs de capteur de véhicule actuelles sont détectées pour chacun des véhicules (11, 12, 13, 14), dans lequel, pour au moins l'une des grandeurs de plusieurs ou de tous les véhicules (11, 12, 13, 14) de la flotte (10), des similitudes sont déterminées, moyennant quoi les véhicules (11, 12, 13, 14) sont répartis dans une classe similaire ou une classe non similaire par rapport à la similitude de l'au moins une grandeur, dans lequel, dans le cas d'une demande d'une prestation de service externe au véhicule (FES), à la place de la grandeur du véhicule demandeur (11) contenant des informations pertinentes pour la prestation de service, la grandeur correspondante d'un véhicule (12) de la classe des véhicules similaires (12), une grandeur déterminée par calcul à partir des grandeurs correspondantes de plusieurs véhicules (12) de la classe des véhicules similaires (12) ou une grandeur similaire générée artificiellement est transmise.

2. Procédé selon la revendication 1,
**caractérisé en ce que**
dans le cas où la prestation de service externe au véhicule (FES) nécessite d'autres informations moins pertinentes pour l'exécution de la prestation de service, lesquelles sont basées sur l'autre grandeur respective, à la place de ladite grandeur du véhicule demandeur (11), la grandeur correspondante d'un véhicule (13) de la classe des véhicules non similaires (13), une grandeur déterminée par calcul à partir des grandeurs correspondantes de plusieurs véhicules (13) de la classe des véhicules non similaires (13) ou une grandeur similaire générée artificiellement est transmise.

3. Procédé selon la revendication 1 ou 2,
**caractérisé en ce que**
la grandeur aléatoire est générée par l'intermédiaire de procédés génératifs d'apprentissage automatique.

4. Procédé selon l'une des revendications 1, 2 ou 3,
**caractérisé en ce que**
la grandeur respective est formée comme quantité des n ou m valeurs de capteur de véhicule.

5. Procédé selon l'une des revendications 1, 2 ou 3,
**caractérisé en ce que**
la grandeur respective est formée comme un vecteur (WK, WZ) basé sur les valeurs de capteur de véhicule respectives dans l'espace à n ou m dimensions.

6. Procédé selon la revendication 5,
**caractérisé en ce que**
la grandeur respective est formée comme une représentation du vecteur (WK, WZ) respectif sur une valeur (WK', WZ') avec un nombre de dimensions inférieur ou au maximum égal.

7. Procédé selon l'une des revendications 1 à 6,
**caractérisé en ce que**
pour la détermination des classes de grandeurs similaires et non similaires, des mécanismes de mise en grappe d'apprentissage automatique sont utilisés afin de déterminer une mesure de similitude, dans lequel les grandeurs sont classées à l'aide d'une valeur prédéfinie et d'une comparaison de la mesure de similitude déterminée avec ladite valeur prédéfinie.

8. Procédé selon la revendication 7,
**caractérisé en ce que**
la valeur prédéfinie est paramétrée ou fixée en fonction de la valeur de capteur de véhicule pertinente, de sa valeur absolue et/ou de la prestation de service externe au véhicule (FES).

9. Procédé selon l'une des revendications 1 à 8,
**caractérisé en ce que**
les grandeurs sont échangées au moins partiellement entre les véhicules (11, 12, 13, 14) et un centre de calcul (4) central, dans lequel l'agrégation et l'évaluation des informations sont effectuées dans le centre de calcul (4) central.

10. Procédé selon l'une des revendications 1 à 9,
**caractérisé en ce que**
les grandeurs sont échangées, agrégées et évaluées au moins partiellement entre les véhicules (11, 12, 13, 14) de la flotte (10).

11. Procédé selon l'une des revendications 1 à 10,
**caractérisé en ce que**
pour la détermination de la distinction entre des informations pertinentes et des informations moins pertinentes pour la prestation de service externe au véhicule (FES), des informations comportant une première grandeur similaire et des informations comportant respectivement une seconde grandeur non similaire sont envoyées au service externe au véhicule (FES) par au moins certains des véhicules (11, 12, 13, 14) de la flotte (10), moyennant quoi la prestation de service est évaluée.

12. Procédé selon la revendication 11,
**caractérisé en ce que**
des valeurs de capteur de véhicule individuelles sont ensuite conservées et d'autres valeurs de capteur de véhicule sont rendues aléatoires afin de déterminer les valeurs de capteur de véhicule pertinentes et moins pertinentes pour l'utilisation de la prestation de service externe au véhicule (FES) respective.

13. Véhicule (11, 12, 13, 14) comportant une pluralité de capteurs et au moins une interface de communication (1), laquelle est configurée pour exécuter le procédé conjointement avec d'autres véhicules (11, 12, 13, 14) et/ou un centre de calcul (4) externe.
